# EUROPÄISCHE PATENTSCHRIFT

(11) **EP 3 537 500 B1**
(45) Veröffentlichungstag und Bekanntmachung des Hinweises auf die Patenterteilung: **02.06.2021**
(21) Anmeldenummer: 18159880.6
(22) Anmeldetag: 05.03.2018
(51) Int. Cl.: H01M 10/653, H01M 10/6557, H01M 10/613, H01M 10/625, H01M 10/643, H01M 50/20

(54) **BATTERIEPACK MIT EINER MEHRZAHL VON BATTERIEMODULEN**
BATTERY PACK WITH A PLURALITY OF BATTERY MODULES
BLOC-BATTERIE AYANT UNE PLURALITÉ DE MODULES DE BATTERIE

(43) Veröffentlichungstag der Anmeldung: 11.09.2019
(73) Patentinhaber: VARTA Microbattery GmbH, 73479 Ellwangen Jagst (DE)
(72) Erfinder: Hald, Stefan, 73479 Ellwangen (DE); Kloos, Dieter, 74579 Fichtenau (DE)
(74) Vertreter: Patentanwaltskanzlei Cartagena

(56) Entgegenhaltungen:
- CN-U- 206 711 984
- DE-A1-102006 059 989
- DE-A1-102008 014 155
- DE-A1-102015 002 828
- US-A1- 2016 172 642

## Beschreibung

Die nachfolgend beschriebene Erfindung betrifft ein Batteriepack, welches eine Mehrzahl von Batteriemodulen aufweist.

Der Begriff "Batteriepack" soll im Kontext der beschriebenen Erfindungsehr breit ausgelegt werden, nämlich als Anordnung mehrerer Batteriemodule, die sich gegenseitig thermisch beeinflussen können. Das Batteriepack kann eine Hülle oder ein Gehäuse umfassen, in deroderdem die Batteriemodule in einem Verbund angeordnet sind, muss es aber nicht. Solche Batteriepacks mit einer Mehrzahl von Batteriemodulen können sowohl in stationären Systemen, etwa dem in der DE 102012209744 A1 beschriebenen Batterieschrank, als auch in mobilen Systemen, beispielsweise als Bestandteil einer KFZ-Batterie, Anwendung finden. Bei den Batteriemodulen kann es sich hierbei um einzelne elektrochemische Zellen (Einzelzellen) handeln oder aber auch um Verbünde aus zwei oder mehr solcher Zellen. Innerhalb eines solchen Verbunds können die Einzelzellen wiederum durch parallele und/oder serielle Verschaltung miteinander verbunden sein.

Grundsätzlich ist man bestrebt, Batteriepacks möglichst kompakt auszubilden, also auf möglichst kleinem Raum so viele Batteriemodule wie möglich anzuordnen. Da Batteriemodule bereits im Normalbetrieb einen nicht unerheblichen Wärmeausstoß haben, müssen Batteriepacks häufig gekühlt werden.

Wenn ein Batteriemodul in einen irregulären Zustand gerät, beispielsweise in Folge einer Überladung oder einer mechanischen Beschädigung, kann es sich sehr stark erhitzen. Ist das Batteriemodul Bestandteil eines Batteriepacks, so kommt es unvermeidlich zu einem Wärmeübertrag auf benachbarte Batteriemodule, die durch die Erwärmung ebenfalls in einen irregulären Zustand überführt werden können. Dieser Effekt ist unter dem Begriff Propagation bekannt.

Aus dem Stand der Technik sind Abstandhalter für Batteriepacks bekannt, die die einzelnen Batteriemodule räumlich voneinander trennen. Beispielsweise ist aus der US 2016/0172642 A1 ein Abstandhalter mit triangulärem Design bekannt, der zwischen einer Zellgruppe aus drei zylindrischen Batteriemodul angeordnet ist. Der Abstandhalter besteht aus einem elektrisch isolierenden Material, das gegebenenfalls auch einer Propagation entgegenwirken könnte. Da der Abstandhalter den Zwischenraum zwischen den drei zylindrischen Batteriemodulen vollständig ausfüllt, behindert es allerdings auch eine mögliche Konvektion und damit eine Kühlung der Batteriemodule.

Aus der EP 2 615 661 A1 ist ein Abstand halter mit einem rechteckigen Rahmen, in dem Aufnahmeteile für Batteriemodule angeordnet sind, bekannt. Bevorzugt ist der Abstandhalter aus Kunststoff gefertigt und dürfte damit ebenfalls einer möglichen Propagation entgegenwirken. Eine Kühlung der Batteriemodule kann durch Kanäle in dem Abstandhalter erfolgen, in denen gegebenenfalls auch Sensoren zur Erfassung der Temperatur der Batteriemodule angeordnet sein können.

Ein weiterer Abstandhalter aus einem Kunststoff ist aus der EP 2 375 471 A2 bekannt. Auch hier ist der kombinierte Einsatz des Abstandhalters mit einem Temperatursensor beschrieben.

Weitere Abstandhalter sind aus der DE 102006059989 A1, der DE 102015002828 A1, der US 2016/0172642 A1, der CN 206711984 U und der DE 102008014155 A1 bekannt.

Der vorliegenden Erfindung lag die Aufgabe zugrunde, ein Batteriepack mit einem gegenüber dem Stand der Technik verbesserten Abstandhalter bereitzustellen.

Zur Lösung dieser Aufgabe schlägt die Erfindung das Batteriepack mit den Merkmalen des Anspruchs 1 vor. Weiterbildungen der Erfindung sind Gegenstand von Unteransprüchen.

Das erfindungsgemäße Batteriepack weist wie alle gattungsgemäßen Batteriepacks eine Mehrzahl von Batteriemodulen auf. Im Gegensatz zu diesen zeichnet es sich allerdings durch eine Kombination der folgenden Merkmale aus:
- Es umfasst einen Abstandhalter, der zwischen den Batteriemodulen angeordnet ist.
- Der Abstandhatter umfasst ein erstes Kühlelement aus einem ersten Wärmeleitmaterial, das mit einem ersten der Batteriemodule in flächigem Kontakt steht.
- Der Abstandhalter umfasst ein zweites Kühlelement aus einem zweiten Wärmeleitmaterial, das mit einem zweiten der Batteriemodule in flächigem Kontakt steht.
- Der Abstandhalter umfasst einen Zwischenraum zwischen den Kühlelementen, der mindestens teilweise mit einem Isoliermaterial befüllt ist.
- Das Isoliermaterial weist eine geringere Wärmeleitfähigkeit auf als das erste und als das zweite Wärmeleitmaterial, so dass eine Erwärmung des ersten Batteriemoduls nicht oder nur verzögert in einer Erwärmung des zweiten Batteriemoduls resultiert.
- Das Isoliermaterial ist in dem Zwischenraum in Form eines Stützelements, an dem das erste und das zweite Kühlelement fixiert sind, angeordnet.

Gegenüber den aus dem Stand der Technik bekannten Abstandhaltern weist der Abstandhalter des erfindungsgemäßen Batteriepacks große Vorteile auf. Die Kühlelemente gewährleisten, dass die mit ihnen im flächigen Kontakt stehenden Batteriemodule entwärmt werden können. Unter einem flächigen Kontakt soll hierbei ein unmittelbarer Kontakt verstanden werden, dass sich zwischen den Kühlelementen und den Batteriemodulen übereine zweidimensionale Kontaktfläche erstreckt. Dies wird bevorzugt dadurch erreicht, dass die Oberflächen, über die die Kühlelemente und die Batteriemodulen unmittelbar miteinander in Kontakt stehen, geometrisch aneinander angepasst sind. Das in dem Zwischenraum angeordnete Isoliermaterial gewährleistet gleichzeitig, dass Wärme nicht ungehindert von einem Batteriemodul auf das nächste übertragen werden kann. Der eingangs erwähnten Propagation wirkt der Abstandhalter damit entgegen.

Im einfachsten Fall kann das Batteriepack einen Abstandhalter umfassen, der nur das erste und das zweite Kühlelement umfasst. Beispielsweise können die die beiden Kühlelemente jeweils einen schichtförmigen Bereich umfassen, zwischen denen der in diesem Fall ebenfalls schichtförmige Zwischenraum zwischen den Kühlelementen ausgebildet ist, der mindestens teilweise mit dem Isoliermaterial befüllt ist. Diese Bereiche sind dann bevorzugt zwischen zwei Batteriemodulen angeordnet, wobei jeder der Bereiche mit einem der Batteriemodule in flächigem Kontakt steht. Ein konkreter Anwendungsfall hierfür wäre beispielsweise, wenn das Batteriepack als Stapel ausgebildetwäre, der zwei oder mehr schichtförmig ausgebildete Einzelzellen umfasst, wobei die gestapelten Zellen jeweils durch den Abstandhalter voneinander getrennt sind.

Die Erfindung ist allerdings nicht auf Ausführungsformen beschränkt, die nur das erste und das zweite Kühlelement umfassen, beschränkt. Besonders bevorzugt sind Ausführungsformen mit zwei bis fünf Kühlelementen, insbesondere mit drei oder vier Kühlelementen, ganz besonders bevorzugt mit drei Kühlelementen, die jeweils mit einem Batteriemodul des Batteriepacks in dem flächigen Kontakt stehen.

Entsprechend weist das Batteriepack in einer ersten, besonders bevorzugten Ausführungsform mit genau drei Kühlelementen die folgenden zusätzlichen Merkmale auf:
- Der Abstandhalter umfasst ein drittes Kühlelement aus einem dritten Wärmeleitmaterial, das mit einem dritten der Batteriemodule in flächigem Kontakt steht.
- Der Abstandhalter umfasst einen Zwischenraum zwischen den drei Kühlelementen, der mindestens teilweise mit dem Isoliermaterial befüllt ist, und
- Das Isoliermaterial weist eine geringere Wärmeleitfähigkeit auf als das dritte Wärmeleitmaterial, so dass eine Erwärmung des dritten Batteriemoduls nicht oder nur verzögert in einer Erwärmung des ersten und/oder des zweiten Batteriemoduls resultiert.

In einer zweiten, besonders bevorzugten Ausführungsform mit genau vier Kühlelementen weist das Batteriepack die folgenden zusätzlichen Merkmale auf:
- Der Abstandhalter umfasst ein drittes Kühlelement aus einem dritten Wärmeleitmaterial, das mit einem dritten der Batteriemodule in flächigem Kontakt steht, und ein viertes Kühlelement aus einem vierten Wärmeleitmaterial, das mit einem vierten der Batteriemodule in flächigem Kontakt steht.
- Der Abstandhalter umfasst einen Zwischenraum zwischen den vier Kühlelementen, der mindestens teilweise mit dem Isoliermaterial befüllt ist, und
- Das Isoliermaterial weist eine geringere Wärmeleitfähigkeit auf als das dritte und das vierte Wärmeleitmaterial, so dass eine Erwärmung des dritten Batteriemoduls nicht oder nur verzögert in einer Erwärmung des ersten und/oder des zweiten und/oder des vierten Batteriemoduls resultiert und eine Erwärmung des vierten Batteriemoduls nicht oder nur verzögert in einer Erwärmung des ersten und/oder des zweiten und/oder des dritten Batteriemoduls resultiert.

Der Abstandhalter dient zur Schaffung eines räumlichen Abstandes zwischen den Batteriemodulen des Batteriepacks. Besonders bevorzugt ist er symmetrisch, insbesondere drehsymmetrisch, ausgebildet. In Ausführungsformen mit drei oder mehr Kühlelementen ist der Abstandhalter bevorzugt derart ausgebildet, dass alle mit den Kühlelementen in Kontakt stehenden Batteriemodule die gleiche Orientierung und den gleichen Abstand zueinander haben. Der Abstandhalter kann als separates Bauteil vorliegen, das zur Bereitstellung des erfindungsgemäßen Batteriepacks zwischen die Batteriemodule des Batteriepacks eingeschoben wird. Er kann aber auch Bestandteil einer Vorrichtung, in welcher das Batteriepack angeordnet ist, beispielsweise des Gehäuses eines Batterieschranks, sein.

In einer bevorzugten Variante weist das Batteriepack mindestens eines der folgenden Merkmale
- das erste und das zweite Wärmeleitmaterial sind identisch,
- das erste und das zweite und das dritte Wärmeleitmaterial sind identisch, oder
- das erste und das zweite und das dritte und das vierte Wärmeleitmaterial sind identisch,
   sowie mindestens ein weiteres, bevorzugt alle, der folgenden Merkmale
- das Isoliermaterial ist ein Kunststoff oder ein kunststoffbasiertes Material,
- an dem Stützelement ist das dritte und/oder das vierte Kühlelement fixiert,
- die Kühlelemente sind über mindestens ein Verbindungselement aus einem fünften Material miteinander verbunden, und
- das fünfte Material ist identisch mit dem ersten und dem zweiten Wärmeleitmaterial, gegebenenfalls auch mit dem dritten und/oder vierten Wärmeleitmaterial,
   auf.

Der Abstandhalter weist gemäß dieser Variante eine hohe strukturelle Integrität auf.

Hierbei kann das Stützelement den Zwischenraum zwischen den Kühlelementen vollständig ausfüllen. Das Stützelement weist dann bevorzugt an seiner Oberfläche Aufnahmen für die Kühlelemente auf. Das Stützelement kann allerdings auch mehrgliedrig ausgebildet sein und für jedes der Kühlelemente ein Glied aufweisen, an oder in dem es fixiert ist.

Besonders bevorzugt ist das Isoliermaterial ein Kunststoff, beispielsweise ein Polycarbonat (PC) oder ein Acrylnitril-Butadien-Styrol (ABS), oder ein kunststoffbasiertes Material, also beispielsweise einen der genannten Kunststoffe, der mit einem Füllstoff versetzt ist.

Bei dem Füllstoff kann es sich auch um ein Phasenwechselmaterial (engl.: Phase change material) handeln, also ein Material, dessen latente Schmelzwärme, Lösungswärme oder Adsorptionswärme größer ist als die Wärme, die es aufgrund seiner spezifischen Wärmekapazität speichern könnte.

In einer weiteren besonders bevorzugten Ausführungsform kann es sich bei dem Isoliermaterial um einen Schaumstoff, also um einen aufgeschäumten Kunststoff, handeln, beispielsweise um einen Polyurethan-Schaum oder um expandiertes Polystyrol (auch bekannt als Styropor).

Es ist grundsätzlich bevorzugt, dass alle Kühlelemente aus dem gleichen Wärmeleitmaterial gebildet sind. In Einzelfällen kann es allerdings auch bevorzugt sein, Kühlelemente innerhalb ein und desselben Batteriepacks aus unterschiedlichen Wärmeleitmaterialien auszubilden. Dies kann beispielsweise vorteilhaft sein wenn Batteriemodule innerhalb des Batteriepacks in Abhängigkeit ihrer Position unterschiedlich stark gekühlt werden müssen. So benötigen Batteriemodule, die in einem Batteriepack außen angeordnet sind, in der Regel weniger Kühlung als Batteriemodule, die im Zentrum eines Batteriepacks angeordnet sind.

Bevorzugt sind alle Kühlelemente und das Verbindungselement Bestandteil ein- und desselben einstückig ausgebildeten Bauteils.

Es ist bevorzugt, dass sich das Batteriepack durch mindestens eines, bevorzugt durch alle der folgenden zusätzlichen Merkmale auszeichnet:
- Das erste und/oder das zweite und/oder das dritte und/oder das vierte Wärmeleitmaterial und/oder das fünfte Material weist oder weisen eine Wärmeleitfähigkeit auf, welche die Wärmeleitfähigkeit des Isoliermaterials mindestens um den Faktor 10, bevorzugt mindestens um den Faktor 100, übersteigt.
- Das erste und/oder das zweite und/oder das dritte und/oder das vierte Wärmeleitmaterial und/oder das fünfte Material ist ein Metall oder eine Metalllegierung, besonders bevorzugt aus der Gruppe mit Eisen, Kupfer. Aluminium und Legierungen dieser Elemente.
- Das erste und/oder das zweite und/oder das dritte und/oder das vierte Wärmeleitmaterial und/oder das fünfte Material ist ein mit einem Feststoff mit einer Wärmeleitfähigkeit ≥ 10 W/(m*K), besonders bevorzugt mit einer Wärmeleitfähigkeit ≥ 100 W/(m*K), beispielsweise Graphit oder Graphen, verfüllter Kunststoff.

Besonders bevorzugt liegt die Wärmeleitfähigkeit der Wärmeleitmaterialien zwischen 15 und 500 W/(m·k), besonders bevorzugt zwischen 20 und 450 W/(m·k) und ganz besonders bevorzugt zwischen 90 und 400 W/(m·k). Die Wärmeleitfähigkeit des Isoliermaterials liegt bevorzugt zwischen 0,01 und 1 W/(m·k), besonders bevorzugt zwischen 0,1 und 0,8 W/(m·k) und ganz besonders bevorzugt zwischen 0,2 und 0,6 W/(m·k).

Die Wärmeleitfähigkeit ist eine Stoffeigenschaft bzw. Stoffkonstante, die den Wärmestrom durch ein Material auf Grund der Wärmeleitung bestimmt. Die Wärmeleitfähigkeit wird typischer Weise als eine spezifische Wärmeleitfähigkeit eines Materials in der bereits genannten Einheit Watt pro Meter und Kelvin W/(m*k) angegeben. Die Wärmeleitfähigkeit der meisten Materialien steigt mit steigender Temperatur leicht an. Die obigen Zahlenwerte beziehen sich auf Wärmeleitfähigkeiten bei 20 °C.

Es ist besonders bevorzugt, dass das Batteriepack mindestens eines, bevorzugt alle der folgenden zusätzlichen Merkmale aufweist:
- Die Batteriemodule sind länglich ausgebildet und weisen zwischen zwei Längsenden jeweils eine Haupterstreckungsachse auf.
- Die Haupterstreckungsachsen des ersten und des zweiten Batteriemoduls sowie gegebenenfalls des dritten und/oder des vierten Batteriemoduls verlaufen parallel zueinander.
- Der Abstandhalter ist als länglicher Formkörper ausgebildet und weist zwischen zwei Längsenden eine Haupterstreckungsachse auf, die parallel zu den Haupterstreckungsachsen des ersten und des zweiten Batteriemoduls verläuft.
- Das erste und/oder das zweite und/oder das dritte und/oder das vierte Kühlelement ist länglich, insbesondere als Streifen, ausgebildet.
- Das erste längliche Kühlelement ist parallel zu der Haupterstreckungsachse des ersten Batteriemoduls ausgerichtet.
- Das zweite längliche Kühlelement ist parallel zu der Haupterstreckungsachse des zweiten Batteriemoduls ausgerichtet.
- Gegebenenfalls ist das dritte längliche Kühlelement parallel zu der Haupterstreckungsachse des dritten Batteriemoduls ausgerichtet.
- Gegebenenfalls ist das vierte längliche Kühlelement parallel zu der Haupterstreckungsachse des vierten Batteriemoduls ausgerichtet.

Ein Batteriemodul oder ein Abstandhalter oder ein Kühlelement ist im Kontext der vorliegenden Anmeldung länglich, wenn der Abstand zwischen den zwei Längsenden seinen maximalen Durchmesser mindestens um den Faktor 2 überschreitet. Die Haupterstreckungsachse ist also bevorzugt eine Längsachse.

Besonders bevorzugt sind die Batteriemodule als Zylinder ausgebildet und weisen eine Höhe auf, die den Zylinderdurchmesser mindestens um den Faktor 2, bevorzugt mindestens um den Faktor 4, übersteigt. Die Längsenden werden in diesen Fällen von den beiden Stirnseiten des Zylinders gebildet. Die Haupterstreckungsachse ist in diesem Fall die Zylinderachse. Bevorzugt sind in diesem Fall die zylindrischen Batteriemodule parallel zueinander ausgerichtet.

Der Abstandhalter kann die gleiche Länge wie die Batteriemodule aufweisen. Er kann aber auch kürzer oder länger sein.

Die Länge der Kühlelemente ist durch die Länge des Abstandhalters limitiert.

In einer bevorzugten Weiterbildung des Batteriepacks weist es mindestens eines, bevorzugt alle der folgenden zusätzlichen Merkmale auf:
- Der Abstandhalter umfasst eine Kopplungseinrichtung zur Ankopplung einer Kühleinrichtung an den Abstandhalter.
- Eine erste Kopplungseinrichtung findet sich an einem der Längsenden des Abstandhalters.
- Eine zweite Kopplungseinrichtung findet sich an einem der Längsenden des Abstandhalters.
- Die erste und/oder die zweite Kopplungseinrichtung umfasst oder ist eine Aufnahme für die Kühleinrichtung oder für ein Verbindungsstück zu der Kühleinrichtung, insbesondere eine Bohrung mit einem Innengewinde.
- Die erste und die zweite Kopplungseinrichtung sind über einen durch den Abstandhalter geführten Kanal miteinander verbunden.
- Der Abstandhalter umfasst als Verbindungselement ein erstes Verbindungselement, das die erste Kopplungseinrichtung umfasst.
- Der Abstandhalter umfasst als Verbindungselement ein zweites Verbindungselement, das die zweite Kopplungseinrichtung umfasst.
- Das erste und/oder das zweite Verbindungselement bildet eines der / bilden die Längsenden des Abstandhalters oder ist an einem der Längsenden / sind an den Längsenden des Abstandhalters angeordnet.
- Das erste und/oder das zweite Verbindungselement bildet / bilden einen Wärmeleitpfad zwischen den Kühlelementen und der Kühleinrichtung.

Die Kühleinrichtung dient dazu, Wärme aus dem Zwischenraum der Batteriemodule herauszuleiten. Eine mögliche Kühleinrichtung kann beispielsweise ein passiver Kühlkörper sein, der die wärmeabgebende Oberfläche der Batteriemodule vergrößert. Es besteht aber auch die Möglichkeit, dass die Kopplungseinrichtung einen Anschluss für einen Kühlkreislauf umfasst, bei dem Luft oder ein anderes Kühlmedium zur Kühlung in den Abstandhalter eingeleitet wird.

Die kann insbesondere dann bevorzugt sein, wenn sich an beiden Enden des Abstandhalters eine Kopplungseinrichtung (die erste und die zweite Kopplungseinrichtung) findet, die über den durch den Abstandhalter geführten Kanal miteinander verbunden sind. In diesem Fall kann das Kühlmedium über eine der Kopplungseinrichtungen in den Abstandhalter eingeleitet und über die andere Kopplungseinrichtung aus dem Abstandhalter herausgeleitet werden.

Das erste und das zweite Verbindungselement sind bevorzugt wärmeleitend miteinander verbunden. So wie das erste und/oder das zweite Verbindungselement einen Wärmeleitpfad zwischen den Kühlelementen und der Kühleinrichtung bilden, können die Kühlelemente auch einen Wärmeleitpfad zwischen den Verbindungselementen bilden.

In einer besonders bevorzugten Ausführungsform weist das Batteriepack mindestens eines, bevorzugt alle der folgenden Merkmale:
- Der Abstandhalter umfasst das erste, das zweite und das dritte Kühlelement, die jeweils aus einem der Wärmeleitmaterialien bestehen und in flächigem Kontakt mit einem der Batteriemodule stehen.
- Der Abstandhalter und die Batteriemodule sind jeweils länglich ausgebildet und weisen zwischen zwei Längsenden jeweils eine Haupterstreckungsachse auf.
- Der Abstandhatter umfasst das Stützelement aus dem Isoliermaterial, an dem das erste und das zweite und das dritte Kühlelement fixiert sind und das den Zwischenraum zwischen diesen drei Kühlelementen ausfüllt.
- Die Kühlelemente sind als Streifen auf der Oberfläche des Stützelements ausgebildet und sind zueinander parallel sowie parallel zu den Haupterstreckungsachsen der Batteriemodule und des Abstandhalters ausgerichtet.
- Der Abstandhalter umfasst als Verbindungselement ein erstes Verbindungselement aus einem der Wärmeleitmaterialien, das die drei Kühlelemente verbindet.
- Das erste Verbindungselement bildet das erste der Längsenden des Abstandhalters.
- Der Abstandhalter umfasstalsVerbindungselement ein zweites Verbindungselement aus einem der Wärmeleitmaterialien, das die drei Kühlelemente verbindet.
- Das zweite Verbindungselement bildet das zweite der Längsenden des Abstandhalters.
- Das Stützelement ist zwischen dem ersten und dem zweiten Verbindungselement angeordnet.
- Das erste und das zweite Verbindungselement verbinden jeweils die drei Kühlelemente miteinander.

In dieser bevorzugten Ausführungsform bestehen die drei Kühlelemente und die Verbindungselemente in aller Regel aus einem identischen Material, beispielsweise einem Metall oder einer Metalllegierung.

In einer bevorzugten Weiterbildung weist das Batteriepack eines der folgenden Merkmale auf:
- Die Batteriemodule des Batteriepacks weisen jeweils einen gebogenen oder nicht gebogenen Kontaktbereich auf, über den sie mit den Kühlelementen in flächigem Kontakt stehen.
- Die Batteriemodule weisen einen zylindrischen Mantel auf, dessen Oberfläche den Kontaktbereich umfasst.
- Die Kühlelemente weisen jeweils einen Kontaktbereich auf, der an die Geometrie des Kontaktbereichs der Batteriemodule angepasst ist.
- Die Kühlelemente weisen jeweils eine langgestreckte Vertiefung mit konkavem Querschnitt auf.

In einer weiteren, besonders bevorzugten Ausführungsform weist das Batteriepack mindestens eines, bevorzugt alle der folgenden Merkmale auf:
- Der Abstandhalter umfasst einen ersten Temperatursensor der in thermischem Kontakt mit dem ersten Kühlelement steht und einen zweiten Temperatursensor der in thermischem Kontakt mit dem zweiten Kühlelement steht sowie gegebenenfalls einen dritten und/oder einen vierten Temperatursensor, die in thermischem Kontakt mit dem dritten und/oder dem vierten Kühlelement stehen.
- Die Temperatursensoren sind unmittelbar oder über einen Wärmeleiter mit den Kühlelementen verbunden.
- Die Temperatursensoren sind in die Kühlelemente oder in Vertiefungen in den Kontaktbereichen der Kühlelemente eingebettet.

Dadurch dass jedem der Kühlelemente ein eigener Temperatursensor zugeordnet ist und die Kühlelemente voneinander durch das Isoliermaterial voneinander isoliert sind, ist gewährleistet, dass die Temperatursensoren von der Wärme des jeweiligen Batteriemoduls in einem höheren Maße beeinflusst werden als von der Wärme eines benachbarten Batteriemoduls. Die Temperatursensoren sind bevorzugt mit einer entsprechenden Regel- und Steuerungseinheit durch Kabel verbunden. Diese Kabel können beispielsweise durch das Stützelement an ein Längsende des Abstandhalters geführt werden.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnungen. Hierbei zeigt schematisch:
Figur 1 eine Ausführungsform eines erfindungsgemäßen Batteriepacks mit einer Mehrzahl von Batteriemodulen samt einem dazwischen angeordneten Abstandhalter in einer Draufsicht frontal von vorne; und
Figur 2 die Rückseite des in Fig. 1 dargestellten Abstandhalter samt einem der Batteriemodule in einer Draufsicht schräg von oben; und
Figur 3 einen Querschnitt des in Fig. 2 dargestellten Abstandhalters (Schnitt durch Linie A in Fig. 2).

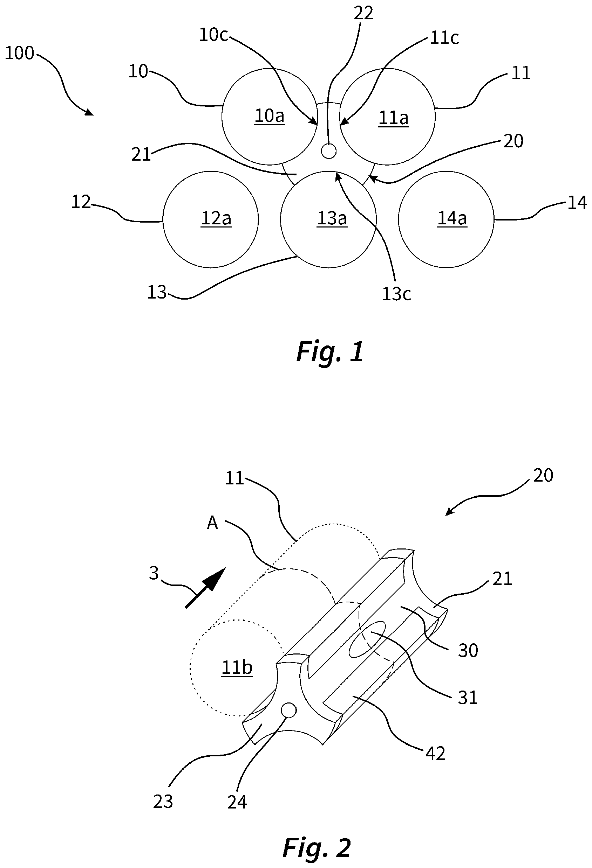

Das in Fig.1 dargestellte Batteriepack 100 umfassteine Mehrzahl von Batteriemodulen 10, 11, 12, 13 und 14 und einen mit drei der Batteriemodule 10, 11 und 13 in flächigem Kontakt stehenden Abstandhalter20.

Der Abstandhalter 20 weist als erstes Längsende ein endständiges Verbindungselement 21 auf, dessen Funktion in Fig. 2 deutlich wird. Das Verbindungselement 21 umfasst als Kopplungseinrichtung 22 eine Bohrung mit einem nicht dargestellten Innengewinde. Diese Kopplungseinrichtung 22 kann dazu dienen, einen Kühler an den Abstandhalter 20 anzuschließen.

Die Batteriemodule 10, 11, 12, 13 und 14 sind in diesem Ausführungsbeispiel zylindrisch ausgebildet und weisen als Haupterstreckungsachse zwischen zwei Längsenden jeweils eine Zylinderachse auf. Die drei mit dem Abstandhalter 20 in flächigem Kontakt stehenden Batteriemodule 10, 11 und 13 sind in einer triangulären Anordnung angeordnet, in der sie jeweils gleichweit voneinander beabstandet sind. Die frontal nach vorne weisenden Stirnseiten 10a, 11a, 12a, 13a und 14a bilden jeweils ein Längsende des jeweiligen Batteriemoduls. Die Batteriemodule und damit auch ihre Haupterstreckungsachsen sind alle parallel zueinander ausgerichtet.

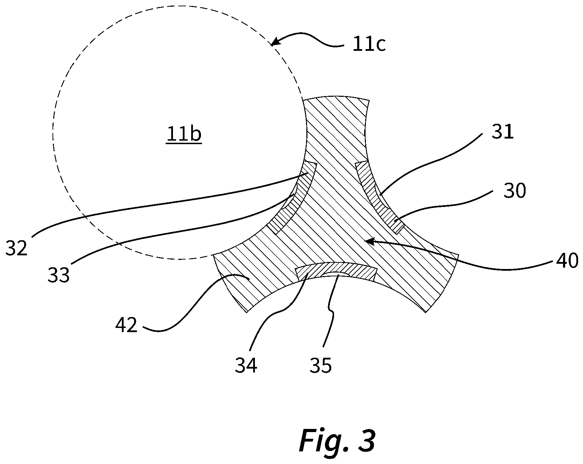

Anhand von Fig. 2 und Fig. 3 wird deutlich, dass der dargestellte Abstandhalter20 drehsymmetrisch ausgebildet ist. Bei der Darstellung des Abstandhalters 20 wurde aus Gründen der Übersichtlichkeit auf die Darstellung der Batteriemodule verzichtet. Lediglich das Batteriemodul 11 ist gestrichelt dargestellt.

Der Abstandhalter 20 umfasst ein erstes Kühlelement 30, das als länglicher Streifen mit gleichbleibender Breite ausgebildet ist. Das zweite und das dritte Kühlelement 32 und 34, die hier nicht sichtbar sind, weisen beide die gleiche Form, Größe und Ausrichtung auf. Alle Kühlelemente 30, 32 und 34 bestehen aus einem gut wärmeleitenden Metall.

Die Kühlelemente 30, 32 und 34 stehen allerdings nicht in unmittelbarem Kontakt miteinander. Stattdessen umfasst derAbstandhalter 20 das Stützelement 42, das den Zwischenraum 40 zwischen den drei Kühlelementen vollständig ausfüllt. Dieses besteht aus einem schlecht wärmeleitenden Kunststoff, der als Isoliermaterial dient und die Kühlelemente 30, 32 und 34 thermisch voneinander isoliert.

Die drei Kühlelemente 30, 32 und 34 sind an dem Stützelement 42 fixiert. Sie sind zueinander parallel sowie in dem Batteriepack 100 parallel zu den Haupterstreckungsachsen der Batteriemodule 10, 11 und 13 und des Abstandhalters 20 ausgerichtet. Der Abstandhalter 20 umfasst als Verbindungselemente ein erstes Verbindungselement 21 und ein zweites Verbindungselement 23. Beide Verbindungselemente 21 und 23 bestehen aus dem Metall, aus dem auch die drei Kühlelemente 30, 32 und 34 bestehen. In der dargestellten Ausführungsform sind das erste, zweite und dritte Kühlelement 30, 32 und 34 und die Verbindungselemente 21 und 23 zu einem gemeinsamen Bauteil zusammengefasst. Die Verbindungselemente 21 und 23 begrenzen die Kühlelemente in axialer Richtung.

Die beiden Verbindungselemente 21 und 23 bilden die Längsenden des Abstandhalters 20, sie schließen das Stützelement 42 zwischen sich ein. Die Verbindungselemente 21 und 23 bilden grundsätzlich einen Wärmeleitpfad zwischen den Kühlelemente 30, 32 und 34. Auf der anderen Seite können die Verbindungselemente 21 und 23, wie bereits erwähnt, über die Kopplungseinrichtungen 22 und 24 gekühlt werden.

Die Kühlelemente 30, 32 und 34 sind jeweils für einen flächigen Kontakt mit den Mantelflächen 10c, 11c und 13c des jeweils zugeordneten Batteriemoduls ausgelegt.

Grundsätzlich wäre es möglich, die Verbindungselemente 21 und 23 über einen durch den Abstandhalter 20 geführten Kanal (hier nicht dargestellt) miteinander zu verbinden. In diesem Fall könnte ein Kühlmedium beispielsweise über die Kopplungseinrichtung 22 in den Abstandhalter 20 eingeleitet und über die Kopplungseinrichtung 24 aus dem Abstandhalter 20 herausgeleitet werden.

Das Verbindungselement 21 steht in der dargestellten Ausführungsform über die Längsenden der Batteriemodule heraus. Es ist jedoch auch eine Variante des Abstandhalters 20 denkbar, in dem die Längsenden des Abstandhalters 20 mit den Längsende 10C des Batteriemoduls 10 bündig abschließt.

Der Abstandhalter 20 umfasst einen ersten Temperatursensor 31 der in thermischem Kontakt mit dem ersten Kühlelement 30 steht und einen zweiten Temperatursensor 33 der in thermischem Kontakt mit dem zweiten Kühlelement32 steht sowie einen dritten Temperatursensor 35, der in thermischem Kontakt mit dem dritten Kühlelement 34 steht. Die Kühlelemente 30, 32 und 34 umfassen jeweils eine Vertiefung, in denen die Temperatursensoren 31, 33 und 35 angeordnet sind.

## Patentansprüche

1. Batteriepack (100), welches eine Mehrzahl von Batteriemodulen (10, 11, 12, 13, 14) aufweist, mit den folgenden Merkmalen:
a. Es umfasst einen Abstandhalter (20), der zwischen den Batteriemodulen (10, 11, 12, 13, 14) angeordnet ist, und
b. Der Abstandhalter (20) umfasst ein erstes Kühlelement (30) aus einem ersten Wärmeleitmaterial, das mit einem ersten der Batteriemodule (10) in flächigem Kontakt steht, und
c. Der Abstand halter umfasst ein zweites Kühlelement (32) aus einem zweiten Wärmeleitmaterial, das mit einem zweiten der Batteriemodule (11) in flächigem Kontakt steht, und
d. Der Abstandhalter (20) umfasst einen Zwischenraum (40) zwischen den Kühlelementen (30, 32), der mindestens teilweise mit einem Isoliermaterial befüllt ist, und
e. Das Isoliermaterial weist eine geringere Wärmeleitfähigkeit auf als das erste und als das zweite Wärmeleitmaterial, so dass eine Erwärmung des ersten Batteriemoduls (10) nicht oder nur verzögert in einer Erwärmung des zweiten Batteriemoduls (11) resultiert, und
f. Das Isoliermaterial ist in dem Zwischenraum in Form eines Stützelements (42), an dem das erste und das zweite Kühlelement (30, 32) fixiert sind, angeordnet.

2. Batteriepack (100) nach Anspruch 1, mit den folgenden zusätzlichen Merkmalen:
a. Der Abstandhalter (20) umfasst ein drittes Kühlelement (34) aus einem dritten Wärmeleitmaterial, das mit einem dritten der Batteriemodule (13) in flächigem Kontakt steht,
b. Der Abstandhalter (20) umfasst einen Zwischenraum (40) zwischen den drei Kühlelementen (30,32,34), der mindestens teilweise mit dem Isoliermaterial befüllt ist, und
c. Das Isoliermaterial weist eine geringere Wärmeleitfähigkeit auf als das dritte Wärmeleitmaterial, so dass eine Erwärmung des dritten Batteriemoduls (13) nicht oder nur verzögert in einer Erwärmung des ersten und/oder des zweiten Batteriemoduls (10, 11) resultiert.

3. Batteriepack nach Anspruch 1, mit den folgenden zusätzlichen Merkmalen:
a. Der Abstandhalter umfasst ein drittes Kühlelement aus einem dritten Wärmeleitmaterial, das mit einem dritten der Batteriemodule in flächigem Kontakt steht, und ein viertes Kühlelement aus einem vierten Wärmeleitmaterial, das mit einem vierten der Batteriemodule in flächigem Kontakt steht,
b. Der Abstandhalter umfasst einen Zwischenraum zwischen den vier Kühlelementen, der mindestens teilweise mit dem Isoliermaterial befüllt ist, und
c. Das Isoliermaterial weist eine geringere Wärmeleitfähigkeit auf als das dritte und das vierte Wärmeleitmaterial, so dass eine Erwärmung des dritten Batteriemoduls nicht oder nur verzögert in einer Erwärmung des ersten und/oder des zweiten und/oder des vierten Batteriemoduls resultiert und eine Erwärmung des vierten Batteriemoduls nicht oder nur verzögert in einer Erwärmung des ersten und/oder des zweiten und/oder des dritten Batteriemoduls resultiert.

4. Batteriepack (100) nach einem der Ansprüche 1 bis 3, mit mindestens einem der folgenden zusätzlichen Merkmale:
a. Das erste und das zweite Wärmeleitmaterial sind identisch.
b. Das erste und das zweite und das dritte Wärmeleitmaterial sind identisch.
c. Das erste und das zweite und das dritte und das vierte Wärmeleitmaterial sind identisch.
d. Das Isoliermaterial ist ein Kunststoff oder ein kunststoffbasiertes Material,
e. An dem Stützelement (42) sind das dritte Kühlelement (34) und/oder das vierte Kühlelement fixiert.
f. Die Kühlelemente (30, 32, 34) sind über mindestens ein Verbindungselement (21) aus einem fünften Material miteinander verbunden.
g. Das fünfte Material ist identisch mit dem ersten und dem zweiten Wärmeleitmaterial, gegebenenfalls auch mit dem dritten und/oder dem vierten Wärmeleitmaterial.

5. Batteriepack (100) nach einem der vorherigen Ansprüche, mit mindestens einem der folgenden zusätzlichen Merkmale:
a. Das erste und/oder das zweite und/oder das dritte und/oder das vierte Wärmeleitmaterial und/oder das fünfte Material weist oder weisen eine Wärmeleitfähigkeit auf, welche die Wärmeleitfähigkeit des Isoliermaterials mindestens um den Faktor 10 übersteigt.
b. Das erste und/oder das zweite und/oder das dritte und/oder das vierte Wärmeleitmaterial und/oder das fünfte Material ist ein Metall oder eine Metalllegierung.
c. Das erste und/oder das zweite und/oder das dritte und/oder das vierte Wärmeleitmaterial und/oder das fünfte Material ist ein mit einem Feststoff mit einer Wärmeleitfähigkeit ≥ 10 W/(m*K) verfüllter Kunststoff.

6. Batteriepack (100) nach einem der vorherigen Ansprüche, mit mindestens einem der folgenden zusätzlichen Merkmale:
a. Die Batteriemodule (10, 11, 12, 13, 14) sind länglich ausgebildet und weisen zwischen zwei Längsenden jeweils eine Haupterstreckungsachse auf.
b. Die Haupterstreckungsachsen des ersten und des zweiten Batteriemoduls (10, 11) sowie gegebenenfalls des dritten Batteriemoduls (13) und/oder des vierten Batteriemoduls verlaufen parallel zueinander.
c. Der Abstandhalter (20) ist als länglicher Formkörper ausgebildet und weist zwischen zwei Längsenden eine Haupterstreckungsachse auf, die parallel zu den Haupterstreckungsachsen des ersten und des zweiten Batteriemoduls (10, 11) verläuft.
d. Das erste und/oder das zweite Kühlelement (30, 32) und/oder das dritte Kühlelement (34) und/oder das vierte Kühlelement ist oder sind länglich, insbesondere als Streifen, ausgebildet.
e. Das erste längliche Kühlelement (30) ist parallel zu der Haupterstreckungsachse des ersten Batteriemoduls (10) ausgerichtet.
f. Das zweite längliche Kühlelement (32) ist parallel zu der Haupterstreckungsachse des zweiten Batteriemoduls (11) ausgerichtet.
g. Gegebenenfalls ist das dritte längliche Kühlelement (34) parallel zu der Haupterstreckungsachse des dritten Batteriemoduls (13) ausgerichtet.
h. Gegebenenfalls ist das vierte längliche Kühlelement parallel zu der Haupterstreckungsachse des vierten Batteriemoduls ausgerichtet.

7. Batteriepack (100) nach einem der vorherigen Ansprüche, mit mindestens einem der folgenden zusätzlichen Merkmale:
a. Der Abstandhalter (20) umfasst eine Kopplungseinrichtung (22) zur Ankopplung einer Kühleinrichtung an den Abstandhalter (20).
b. Eine erste Kopplungseinrichtung (22) findet sich an einem der Längsenden des Abstandhalters.
c. Eine zweite Kopplungseinrichtung findet sich an einem der Längsenden des Abstandhalters.
d. Die erste und/oder die zweite Kopplungseinrichtung (22) umfasst oder ist eine Aufnahme für die Kühleinrichtung oder für ein Verbindungsstück zu der Kühleinrichtung, insbesondere eine Bohrung mit einem Innengewinde.
e. Die erste und die zweite Kopplungseinrichtung sind über einen durch den Abstandhalter geführten Kanal miteinander verbunden.
f. Der Abstandhalter (20) umfasst als Verbindungselement (21) ein erstes Verbindungselement, das die erste Kopplungseinrichtung (22) umfasst.
g. Der Abstandhalter umfasst als Verbindungselement ein zweites Verbindungselement, das die zweite Kopplungseinrichtung umfasst.
h. Das erste und/oder das zweite Verbindungselement (21) bildet eines der / bilden die Längsenden des Abstandhalters (20) oder ist an einem der Längsenden / sind an den Längsenden des Abstandhalters (20) angeordnet.
i. Das erste und/oder das zweite Verbindungselement (21) bildet / bilden einen Wärmeleitpfad zwischen den Kühlelementen (30, 32, 34) und der Kühleinrichtung.

8. Batteriepack (100) nach einem der vorherigen Ansprüche, mit den folgenden zusätzlichen Merkmalen:
a. Der Abstandhalter (20) umfasst das erste, das zweite und das dritte Kühlelement (30, 32, 34), die jeweils aus einem der Wärmeleitmaterialien bestehen und in flächigem Kontakt mit einem der Batteriemodule (10, 11, 13) stehen.
b. Der Abstandhalter (20) und die Batteriemodule (10, 11, 13) sind jeweils länglich ausgebildet und weisen zwischen zwei Längsenden jeweils eine Haupterstreckungsachse auf.
c. Der Abstandhalter (20) umfasst das Stützelement (42) aus dem Isoliermaterial, an dem das erste und das zweite und das dritte Kühlelement (30, 32, 34) fixiert sind und das den Zwischenraum (40) zwischen diesen drei Kühlelementen ausfüllt.
d. Die Kühlelemente (30, 32, 34) sind als Streifen auf der Oberfläche des Stützelements (42) ausgebildet und sind zueinander parallel sowie parallel zu den Haupterstreckungsachsen der Batteriemodule (10, 11, 13) und des Abstandhalters (20) angeordnet.
e. Der Abstandhalter (20) umfasst als Verbindungselement ein erstes Verbindungselement (21) aus einem der Wärmeleitmaterialien, das die drei Kühlelemente (30,32,34) verbindet.
f. Das erste Verbindungselement (21) bildet das erste der Längsenden des Abstandhalters (20).
g. Der Abstandhalter umfasst als Verbindungselement ein zweites Verbindungselement (23) aus einem der Wärmeleitmaterialien, das die drei Kühlelemente (30, 32, 34) verbindet.
h. Das zweite Verbindungselement (23) bildet das zweite der Längsenden des Abstandhalters (20).
i. Das Stützelement (42) istzwischen dem ersten Verbindungselement (21) und dem zweiten Verbindungselement (23) angeordnet.
j. Das erste Verbindungselement (21) und das zweite Verbindungselement (23) verbinden jeweils die drei Kühlelemente (30, 32, 34) miteinander.

9. Batteriepack (100) nach einem der vorherigen Ansprüche insbesondere nach Anspruch 8, mit den folgenden zusätzlichen Merkmalen:
a. Die Batteriemodule (10, 11, 13) des Batteriepacks (100) weisen jeweils einen gebogenen oder nicht gebogenen Kontaktbereich auf, über den sie mit den Kühlelementen (30, 32, 34) in flächigem Kontakt stehen.
b. Die Batteriemodule (10, 11, 13) weisen einen zylindrischen Mantel auf, dessen Oberfläche den Kontaktbereich umfasst.
c. Die Kühlelemente (30,32,34) weisen jeweils einen Kontaktbereich auf, der an die Geometrie des Kontaktbereichs der Batteriemodule (10, 11, 13) angepasst ist.
d. Die Kühlelemente weisen jeweils eine langgestreckte Vertiefung mit konkavem Querschnitt auf.

10. Batteriepack (100) nach einem der vorherigen Ansprüche, mit mindestens einem der folgenden zusätzlichen Merkmale:
a. Der Abstandhalter (20) umfasst einen ersten Temperatursensor (31) der in thermischem Kontakt mit dem ersten Kühlelement (30) steht und einen zweiten Temperatursensor (33) der in thermischem Kontakt mit dem zweiten Kühlelement (32) steht sowie gegebenenfalls einen dritten Temperatursensor (35) und/oder einen vierten Temperatursensor, die in thermischem Kontakt mit dem dritten Kühlelement (34) und/oder dem vierten Kühlelement stehen.
b. Die Temperatursensoren (31, 33, 35) sind unmittelbar oder über einen Wärmeleiter mit den Kühlelementen (30,32,34) verbunden.
c. Die Temperatursensoren (31,33,35) sind in die Kühlelemente oder in Vertiefungen in den Kontaktbereichen der Kühlelemente (30, 32, 34) eingebettet.

## Claims

1. Battery pack (100), which has a plurality of battery modules (10, 11, 12, 13, 14), having the following features:
a. it comprises a spacer (20) which is arranged between the battery modules (10, 11, 12, 13, 14), and
b. the spacer (20) comprises a first cooling element (30) composed of a first thermally conductive material, which first cooling element is in surface-to-surface contact with a first of the battery modules (10), and
c. the spacer comprises a second cooling element (32) composed of a second thermally conductive material, which second cooling element is in surface-to-surface contact with a second of the battery modules (11), and
d. the spacer (20) comprises an intermediate space (40) between the cooling elements (30, 32), which intermediate space is at least partially filled with an insulating material, and
e. the insulating material has a lower thermal conductivity than the first and than the second thermally conductive material, so that heating of the first battery module (10) does not result in heating of the second battery module (11) or does so only with a delay, and
f. the insulating material is arranged in the intermediate space in the form of a supporting element (42) to which the first and the second cooling element (30, 32) are fixed.

2. Battery pack (100) according to Claim 1, having the following additional features:
a. the spacer (20) comprises a third cooling element (34) composed of a third thermally conductive material, which third cooling element is in surface-to-surface contact with a third of the battery modules (13),
b. the spacer (20) comprises an intermediate space (40) between the three cooling elements (30, 32, 34), which intermediate space is at least partially filled with the insulating material, and
c. the insulating material has a lower thermal conductivity than the third thermally conductive material, so that heating of the third battery module (13) does not result in heating of the first and/or the second battery module (10, 11) or does so only with a delay.

3. Battery pack according to Claim 1, having the following additional features:
a. the spacer comprises a third cooling element composed of a third thermally conductive material, which third cooling element is in surface-to-surface contact with a third of the battery modules, and a fourth cooling element composed of a fourth thermally conductive material, which fourth cooling element is in surface-to-surface contact with a fourth of the battery modules,
b. the spacer comprises an intermediate space between the four cooling elements, which intermediate space is at least partially filled with the insulating material, and
c. the insulating material has a lower thermal conductivity than the third and the fourth thermally conductive material, so that heating of the third battery module does not result in heating of the first and/or the second and/or the fourth battery module or does so only with a delay, and heating of the fourth battery module does not result in heating of the first and/or the second and/or the third battery module or does so only with a delay.

4. Battery pack (100) according to one of Claims 1 to 3, having at least one of the following additional features:
a. The first and the second thermally conductive material are identical.
b. The first and the second and the third thermally conductive material are identical.
c. The first and the second and the third and the fourth thermally conductive material are identical.
d. The insulating material is a plastic or a plastic-based material.
e. The third cooling element (34) and/or the fourth cooling element are/is fixed to the supporting element (42).
f. The cooling elements (30, 32, 34) are connected to one another by means of at least one connecting element (21) composed of a fifth material.
g. The fifth material is identical to the first and the second thermally conductive material, possibly also to the third and/or the fourth thermally conductive material.

5. Battery pack (100) according to one of the preceding claims, having at least one of the following additional features:
a. The first and/or the second and/or the third and/or the fourth thermally conductive material and/or the fifth material have/has a thermal conductivity which exceeds the thermal conductivity of the insulating material at least by a factor of 10.
b. The first and/or the second and/or the third and/or the fourth thermally conductive material and/or the fifth material are/is a metal or a metal alloy.
c. The first and/or the second and/or the third and/or the fourth thermally conductive material and/or the fifth material are/is a plastic which is filled with a solid having a thermal conductivity ≥ 10 W/(m*K).

6. Battery pack (100) according to one of the preceding claims, having at least one of the following additional features:
a. The battery modules (10, 11, 12, 13, 14) are of elongate design and each have an axis of main extent between two longitudinal ends.
b. The axes of main extent of the first and the second battery module (10, 11) and also possibly the third battery module (13) and/or the fourth battery module run parallel in relation to one another.
c. The spacer (20) is designed as an elongate shaped body and has an axis of main extent between two longitudinal ends, which axis of main extent runs parallel in relation to the axes of main extent of the first and the second battery module (10, 11).
d. The first and/or the second cooling element (30, 32) and/or the third cooling element (34) and/or the fourth cooling element are/is of elongate design, in particular designed as a strip.
e. The first elongate cooling element (30) is oriented parallel in relation to the axis of main extent of the first battery module (10).
f. The second elongate cooling element (32) is oriented parallel in relation to the axis of main extent of the second battery module (11).
g. The third elongate cooling element (34) may be oriented parallel in relation to the axis of main extent of the third battery module (13).
h. The fourth elongate cooling element may be oriented parallel in relation to the axis of main extent of the fourth battery module.

7. Battery pack (100) according to one of the preceding claims, having at least one of the following additional features:
a. The spacer (20) comprises a coupling device (22) for coupling a cooling device to the spacer (20).
b. A first coupling device (22) is located at one of the longitudinal ends of the spacer.
c. A second coupling device is located at one of the longitudinal ends of the spacer.
d. The first and/or the second coupling device (22) comprise/comprises or are/is a receptacle for the cooling device or for a connecting piece to the cooling device, in particular a bore with an internal thread.
e. The first and the second coupling device are connected to one another by means of a channel which is guided through the spacer.
f. The spacer (20) comprises, as connecting element (21), a first connecting element which comprises the first coupling device (22).
g. The spacer comprises, as connecting element, a second connecting element which comprises the second coupling device.
h. The first and/or the second connecting element (21) form the longitudinal ends/forms one of the longitudinal ends of the spacer (20) or are arranged at the longitudinal ends/is arranged at one of the longitudinal ends of the spacer (20).
i. The first and/or the second connecting element (21) form/forms a thermally conductive path between the cooling elements (30, 32, 34) and the cooling device.

8. Battery pack (100) according to one of the preceding claims, comprising the following additional features:
a. The spacer (20) comprises the first, the second and the third cooling element (30, 32, 34) which are each composed of one of the thermally conductive materials and are in surface-to-surface contact with one of the battery modules (10, 11, 13).
b. The spacer (20) and the battery modules (10, 11, 13) are each of elongate design and each have an axis of main extent between two longitudinal ends.
c. The spacer (20) comprises the supporting element (42) composed of the insulating material, to which supporting element the first and the second and the third cooling element (30, 32, 34) are fixed and which supporting element fills the intermediate space (40) between these three cooling elements.
d. The cooling elements (30, 32, 34) are designed as strips on the surface of the supporting element (42) and are arranged parallel in relation to one another and also parallel in relation to the axes of main extent of the battery modules (10, 11, 13) and the spacer (20).
e. The spacer (20) comprises, as connecting element, a first connecting element (21) composed of one of the thermally conductive materials, which first connecting element connects the three cooling elements (30, 32, 34).
f. The first connecting element (21) forms the first of the longitudinal ends of the spacer (20).
g. The spacer comprises, as connecting element, a second connecting element (23) composed of one of the thermally conductive materials, which second connecting element connects the three cooling elements (30, 32, 34).
h. The second connecting element (23) forms the second of the longitudinal ends of the spacer (20).
i. The supporting element (42) is arranged between the first connecting element (21) and the second connecting element (23).
j. The first connecting element (21) and the second connecting element (23) each connect the three cooling elements (30, 32, 34) to one another.

9. Battery pack (100) according to one of the preceding claims, in particular according to Claim 8, having the following additional features:
a. The battery modules (10, 11, 13) of the battery pack (100) each have a bent or non-bent contact region by means of which they are in surface-to-surface contact with the cooling elements (30, 32, 34).
b. The battery modules (10, 11, 13) have a cylindrical casing, the surface of which comprises the contact region.
c. The cooling elements (30, 32, 34) each have a contact region which is matched to the geometry of the contact region of the battery modules (10, 11, 13).
d. The cooling elements each have an elongate recess with a concave cross section.

10. Battery pack (100) according to one of the preceding claims, having at least one of the following additional features:
a. The spacer (20) comprises a first temperature sensor (31) which is in thermal contact with the first cooling element (30) and a second temperature sensor (33) which is in thermal contact with the second cooling element (32) and also possibly a third temperature sensor (35) and/or a fourth temperature sensor which are in thermal contact with the third cooling element (34) and/or the fourth cooling element.
b. The temperature sensors (31, 33, 35) are connected to the cooling elements (30, 32, 34) directly or by means of a thermal conductor.
c. The temperature sensors (31, 33, 35) are embedded into the cooling elements or into recesses in the contact regions of the cooling elements (30, 32, 34) .

## Revendications

1. Bloc-batterie (100) qui comporte une pluralité de modules de batterie (10, 11, 12, 13, 14), ledit bloc-batterie ayant les caractéristiques suivantes :
a. il comprend un élément d'espacement (20) qui est disposé entre les modules de batterie (10, 11, 12, 13, 14), et
b. l'élément d'espacement (20) comprend un premier élément de refroidissement (30) en premier matériau thermoconducteur qui est en contact surfacique avec un premier module parmi les modules de batterie (10), et
c. l'élément d'espacement comprend un deuxième élément de refroidissement (32) en deuxième matériau thermoconducteur qui est en contact surfacique avec un deuxième module parmi les modules de batterie (11), et
d. l'élément d'espacement (20) comprend un espace intermédiaire (40) qui est ménagé entre les éléments de refroidissement (30, 32) et qui est rempli au moins partiellement d'un matériau isolant, et
e. le matériau isolant présente une conductivité thermique inférieure à celle du premier et du deuxième matériau thermoconducteur de sorte que l'échauffement du premier module de batterie (10) n'entraîne pas l'échauffement du deuxième module de batterie (11) ou seulement de manière retardée, et
f. le matériau isolant est disposé dans l'espace intermédiaire sous la forme d'un élément de support (42) auquel sont fixés les premier et deuxième éléments de refroidissement (30, 32).

2. Bloc-batterie (100) selon la revendication 1, ayant les caractéristiques supplémentaires suivantes :
a. l'élément d'espacement (20) comprend un troisième élément de refroidissement (34) en troisième matériau thermoconducteur qui est en contact surfacique avec un troisième module parmi les modules de batterie (13),
b. l'élément d'espacement (20) comprend un espace intermédiaire (40) qui est ménagé entre les trois éléments de refroidissement (30, 32, 34) et qui est rempli au moins partiellement de matériau isolant, et
c. le matériau isolant a une conductivité thermique inférieure à celle du troisième matériau thermoconducteur de sorte que l'échauffement du troisième module de batterie (13) n'entraîne pas d'échauffement du premier et/ou du deuxième module de batterie (10, 11) ou seulement de manière retardée.

3. Bloc-batterie selon la revendication 1, ayant les caractéristiques supplémentaires suivantes :
a. l'élément d'espacement comprend un troisième élément de refroidissement en troisième matériau thermoconducteur qui est en contact surfacique avec un troisième module parmi les modules de batterie, et un quatrième élément de refroidissement en quatrième matériau thermoconducteur qui est en contact surfacique avec un quatrième module parmi les modules de batterie,
b. l'élément d'espacement comprend un espace intermédiaire qui est ménagé entre les quatre éléments de refroidissement et qui est rempli au moins partiellement de matériau isolant, et
c. le matériau isolant a une conductivité thermique inférieure à celle du troisième et du quatrième matériau thermoconducteur de sorte que l'échauffement du troisième module de batterie n'entraîne pas d'échauffement du premier et/ou du deuxième et/ou du quatrième module de batterie, ou seulement de manière retardée, et l'échauffement du quatrième module de batterie n'entraîne pas l'échauffement du premier et/ou du deuxième et/ou du troisième module de batterie ou seulement de manière retardée.

4. Bloc batterie (100) selon l'une des revendications 1 à 3, ayant l'une au moins des caractéristiques supplémentaires suivantes :
a. les premier et deuxième matériaux thermoconducteurs sont identiques,
b. les premier et deuxième et troisième matériaux thermoconducteurs sont identiques,
c. les premier et deuxième et troisième et quatrième matériaux thermoconducteurs sont identiques,
d. le matériau isolant est une matière synthétique ou un matériau à base de matière synthétique,
e. le troisième élément de refroidissement (34) et/ou le quatrième élément de refroidissement sont fixés à l'élément de support (42),
f. les éléments de refroidissement (30, 32, 34) sont reliés les uns aux autres par le biais d'au moins un élément de liaison (21) en cinquième matériau,
g. le cinquième matériau est identique au premier et au deuxième matériau thermoconducteur, éventuellement également au troisième et/ou au quatrième matériau thermoconducteur.

5. Bloc-batterie (100) selon l'une des revendications précédentes, ayant l'une au moins des caractéristiques supplémentaires suivantes :
a. les premier et/ou deuxième et/ou troisième et/ou quatrième et/ou cinquième matériaux thermoconducteurs ont une conductivité thermique qui est supérieure à la conductivité thermique du matériau isolant d'au moins un facteur 10,
b. les premier et/ou deuxième et/ou troisième et/ou quatrième et/ou cinquième matériaux thermoconducteurs sont un métal ou un alliage métallique,
c. les premier et/ou deuxième et/ou troisième et/ou quatrième et/ou cinquième matériaux thermoconducteurs sont une matière synthétique chargée d'une matière solide de conductivité thermique ≥ 10 W/(m*K).

6. Bloc-batterie (100) selon l'une des revendications précédentes, ayant l'une au moins des caractéristiques supplémentaires suivantes :
a. les modules de batterie (10, 11, 12, 13, 14) sont allongés et comportent chacun un axe d'extension principal entre deux extrémités longitudinales,
b. les axes d'extension principaux des premier et deuxième modules de batterie (10, 11) et éventuellement du troisième module de batterie (13) et/ou du quatrième module de batterie sont parallèles entre eux,
c. l'élément d'espacement (20) est conçu comme un corps moulé allongé et comporte entre deux extrémités longitudinales un axe d'extension principal qui est parallèle aux axes d'extension principaux des premier et deuxième modules de batterie (10, 11),
d. les premier et/ou deuxième éléments de refroidissement (30, 32) et/ou le troisième élément de refroidissement (34) et/ou le quatrième élément de refroidissement sont allongés, notamment sous forme de bandes,
e. le premier élément de refroidissement allongé (30) est orienté parallèlement à l'axe d'extension principal du premier module de batterie (10),
f. le deuxième élément de refroidissement allongé (32) est orienté parallèlement à l'axe d'extension principal du deuxième module de batterie (11),
g. le troisième élément de refroidissement allongé (34) est orienté parallèlement à l'axe d'extension principal du troisième module de batterie (13),
h. le quatrième élément de refroidissement allongé est orienté parallèlement à l'axe d'extension principal du quatrième module de batterie.

7. Bloc-batterie (100) selon l'une des revendications précédentes, ayant l'une au moins des caractéristiques supplémentaires suivantes :
a. l'élément d'espacement (20) comprend un dispositif de couplage (22) destiné à accoupler un dispositif de refroidissement à l'élément d'espacement (20),
b. un premier dispositif de couplage (22) est situé à l'une des extrémités longitudinales de l'élément d'espacement,
c. un deuxième dispositif de couplage est situé à l'une des extrémités longitudinales de l'élément d'espacement,
d. les premier et/ou deuxième dispositifs de couplage (22) comprennent un logement destiné au dispositif de refroidissement ou à une pièce de liaison au dispositif de refroidissement, en particulier un alésage pourvu d'un filetage intérieur,
e. les premier et deuxième dispositifs de couplage sont reliés l'un à l'autre par un conduit ménagé à travers l'élément d'espacement,
f. l'élément d'espacement (20) comprend, en tant qu'élément de liaison (21), un premier élément de liaison qui comprend le premier dispositif de couplage (22),
g. l'élément d'espacement comprend, en tant qu'élément de liaison, un deuxième élément de liaison qui comprend le deuxième dispositif de couplage,
h. les premier et/ou deuxième éléments de liaison (21) forment l'une des extrémités longitudinales/les extrémités longitudinales de l'élément d'espacement (20) ou sont disposés à l'une des extrémités longitudinales/aux extrémités longitudinales de l'élément d'espacement (20),
i. les premier et/ou deuxième éléments de liaison (21) forment un chemin de conduction thermique entre les éléments de refroidissement (30, 32, 34) et le dispositif de refroidissement.

8. Bloc-batterie (100) selon l'une des revendications précédentes, ayant les caractéristiques supplémentaires suivantes :
a. l'élément d'espacement (20) comprend les premier, deuxième et troisième éléments de refroidissement (30, 32, 34) qui sont chacun en l'un des matériaux thermoconducteurs et en contact surfacique avec l'un des modules de batterie (10, 11, 13),
b. l'élément d'espacement (20) et les modules de batterie (10, 11, 13) sont tous allongés et comportent chacun un axe d'extension principal entre deux extrémités longitudinales,
c. l'élément d'espacement (20) comprend l'élément de support (42) en matériau isolant auquel les premier, deuxième et troisième éléments de refroidissement (30, 32, 34) sont fixés et qui remplit l'espace intermédiaire (40) entre ces trois éléments de refroidissement,
d. les éléments de refroidissement (30, 32, 34) sont réalisés sous forme de bandes sur la surface de l'élément de support (42) et sont disposés parallèlement les uns aux autres et parallèlement aux axes d'extension principaux des modules de batterie (10, 11, 13) et de l'élément d'espacement (20),
e. l'élément d'espacement (20) comprend comme élément de liaison un premier élément de liaison (21) en l'un des matériaux thermoconducteurs qui relie les trois éléments de refroidissement (30, 32, 34),
f. le premier élément de liaison (21) forme la première des extrémités longitudinales de l'élément d'espacement (20),
g. l'élément d'espacement comprend en tant qu'élément de liaison un deuxième élément de liaison (23) en l'un des matériaux thermoconducteurs qui relie les trois éléments de refroidissement (30, 32, 34),
h. le deuxième élément de liaison (23) forme la deuxième des extrémités longitudinales de l'élément d'espacement (20),
i. l'élément de support (42) est disposé entre le premier élément de liaison (21) et le deuxième élément de liaison (23),
j. le premier élément de liaison (21) et le deuxième élément de liaison (23) relient chacun les trois éléments de refroidissement (30, 32, 34) les uns aux autres.

9. Bloc-batterie (100) selon l'une des revendications précédentes, notamment selon la revendication 8, ayant les caractéristiques supplémentaires suivantes :
a. les modules de batterie (10, 11, 13) du bloc-batterie (100) comportent chacun une zone de contact incurvée ou non courbe par le biais de laquelle ils sont en contact surfacique avec les éléments de refroidissement (30, 32, 34),
b. les modules de batterie (10, 11, 13) comportent une enveloppe cylindrique dont la surface comprend la zone de contact,
c. les éléments de refroidissement (30, 32, 34) comportent chacun une zone de contact qui est adaptée à la géométrie de la zone de contact des modules de batterie (10, 11, 13),
d. les éléments de refroidissement comportent chacun une dépression allongée de section transversale concave.

10. Bloc-batterie (100) selon l'une des revendications précédentes, ayant l'une au moins des caractéristiques supplémentaires suivantes :
a. l'élément d'espacement (20) comprend un premier capteur de température (31) qui est en contact thermique avec le premier élément de refroidissement (30) et un deuxième capteur de température (33) qui est en contact thermique avec le deuxième élément de refroidissement (32) et éventuellement un troisième capteur de température (35) et/ou un quatrième capteur de température, qui sont en contact thermique avec le troisième élément de refroidissement (34) et/ou le quatrième élément de refroidissement,
b. les capteurs de température (31, 33, 35) sont reliés directement, ou par le biais d'un conducteur de chaleur, aux éléments de refroidissement (30, 32, 34),
c. les capteurs de température (31, 33, 35) sont noyés dans les éléments de refroidissement ou dans des dépressions ménagées dans les zones de contact des éléments de refroidissement (30, 32, 34).
